# EUROPEAN PATENT SPECIFICATION

(11) **EP 2 881 009 B1**
(45) Date of publication and mention of the grant of the patent: **08.05.2019**
(21) Application number: 14180058.1
(22) Date of filing: 06.08.2014
(51) Int. Cl.: A47B 47/00, F16B 7/18

(54) **Fitting device for joining members**
Montagevorrichtung für Verbindungselemente
Dispositif de montage pour des membres d'assemblage

(30) Priority: 11.11.2013 IT MI20131868
(43) Date of publication of application: 10.06.2015
(73) Proprietor: E.T.A. S.p.A., 22035 Canzo (Como) (IT)
(72) Inventor: Turati, Aldo, 22039 Valbrona (Como) (IT)
(74) Representative: Tarabbia, Luigi

(56) References cited:
- WO-A1-86/03265
- DE-A1- 3 324 675
- DE-U1- 9 308 677
- GB-A- 2 152 174

## Description

The present invention refers to a fitting device for joining members, particularly usable for connecting structural elements carrying cabinets.

It is well-known that cabinets, in the most generic sense of the term, are made with crosspieces and uprights: while the crosspieces typically lie on mutually parallel horizontal planes, the uprights are arranged substantially in a vertical direction and function as constraining elements with the crosspieces at their respective ends.

With particular reference to cabinets in sheet metal, generally used for electricity distribution and generally designated cabinets for electrical panels, crosspieces and uprights are specified comprising members having a transverse section with a C-shaped conformation or in any event a shape of semi-open type, such as not to define an area substantially enclosed within the transverse section itself. The coupling between crosspieces and uprights is of angular type, and is effected by means of lock screws which are fitted into openings positioned both on the uprights and on the crosspieces. In particular, the screws are introduced and then tightened from the inside of the cabinet, precisely thanks to the C-shaped conformation of the members, which allows an operator to act from an area inside the cabinet

Examples of fitting devices can be found in the publications DE3324675A and GB2152174A.

However, the solution of known type described above has the disadvantage that the coupling between the crosspieces and the uprights is awkward, and especially in confined spaces the operator has considerable difficulty in acting, having to introduce tools such as screwdrivers, open-ended spanners, allen keys or the like into the semi-open section of the crosspieces, which is anyway narrow.

Furthermore, the section of the individual members must be fairly large in order to ensure sufficient structural stability inside the cabinet. Equally, as the load which the members must support increases, the section of the sheet from which the members are made must also increase as a result; in particular where the members are made of metal, the increase in weight becomes a factor which is no longer negligible.

The object of the present innovation is to propose a fitting device for joining members which resolves the disadvantages described above.

According to the present invention a fitting device for joining members is created, characterised in that it comprises a plurality of walls respectively perpendicular to each other and forming a dihedron; each of the walls of said plurality of walls comprising a first surface facing said dihedron and a second surface, opposite to said first surface, configured for enabling the retention of members of semi-closed shape; said device comprising retaining means associated with each second surface of said plurality of walls, said retaining means being capable of being inserted between terminal lateral portions of said members of semi-closed shape, being retained within an area substantially delimited by said semi-closed shape. The retaining means are interposed blocks, each being retained on the respective second surface of each wall of said plurality of walls by pins extending outwards and perpendicular to said second surfaces; said interposed blocks having walls extending in use perpendicularly to said second surface and capable of enabling fitting together with said terminal lateral portions of said members.

Advantageously, said retaining means comprise recesses configured for housing said pins in use.

Advantageously, each wall of said plurality of walls comprises a respective opening for the passage of at least one respective at least partially cylindrical elongated constraint means, configured for remaining, in use, at least partially within said dihedron identified by said plurality of walls and extending at least partially into the respective member.

In particular, said at least partially cylindrical elongated constraing means is a lock screw comprising a head and a threaded portion. Advantageously, said retaining means comprise an opening for screwing in said threaded portion of said lock screw.

Advantageously, there is also present a closing cap for said dihedron.

In particular, the closing cap for said dihedron comprises mechanical interacting means in opposition to said head of said lock screw, which interacting means are able to create friction on said head such as to overcome at least the weight force to which said cap is subjected. According to the present innovation there is also created a kit comprising a device according to the decryption given above and a member with semi-closed shape.

In detail said member has a lateral profile with a double J-shape.

In detail the member extends in length along a first axis, and the section of said member, viewed on a pair of axes perpendicular to one another and further perpendicular to the axis, comprises a pair of walls of greater extension, a second pair of walls each joined to the respective wall of the first pair of walls and arranged perpendicular to the respective wall of the first pair of walls, being joined at the opposite end to the end at which each wall of the first pair of walls is joined to the other, and a third pair of walls each joined to the respective wall of the second pair of walls and arranged perpendicular to the respective wall of the second pair of walls, being joined at the opposite end to the end at which each wall of the second pair of walls is joined to the other.

Further characteristics and details of a preferred and non-limiting embodiment of the innovation set forth here will be clearly specified in the description which follows, with reference to the attached drawings in which:
- figure 1 shows a first exploded perspective view of a fitting device for joining members according to the present innovation; and
- figure 2 shows a second exploded perspective view of a fitting device for joining members according to the present innovation.

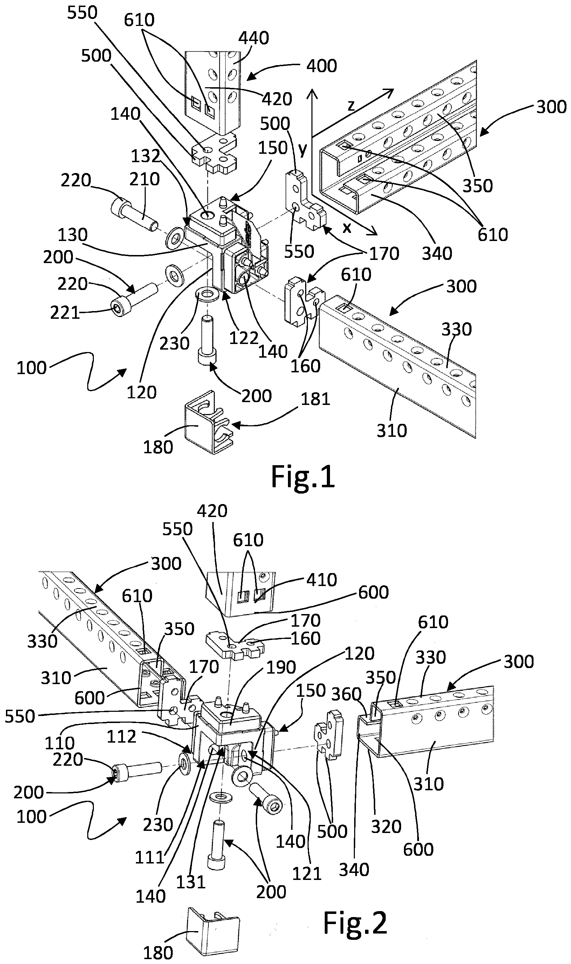

As illustrated in figure 1, reference number 100 comprehensively indicates a fitting device for joining members; in particular this device is conceived for being a fitting device for joining crosspieces and uprights of a cabinet. Preferably, this cabinet is a cabinet capable of containing electrical apparatus or panels.

The device 100 comprises an angular body which permits the insertion from outside of lock screws 200 which are introduced and then tightened in respective recesses 310, 410 of:
- at least one pair of longitudinal crosspieces 300, installed in use in directions perpendicular to each other, thereby identifying a horizontal plane;
- an upright 400, oriented perpendicular to the two crosspieces.

As illustrated in figure 1 and figure 2, the crosspieces and the uprights have a plurality of openings along the direction identified by their length and are preferably but non-limitingly made of metal.

In detail the device 100 comprises a first wall 110, a second wall 120 and a third wall 130 perpendicular to each other, each of which has a first surface 111, 121, 131 within a dihedron formed by the ensemble of the first, second and third walls 110, 120, 130 and a second surface 112, 122, 132 outside the dihedron formed by the three faces and therefore facing towards the opposite side of each of the walls from the first surface of each wall.

In detail, the first and the second walls 110, 120 form between them an angle of 90°, and the third wall 130 forms in its turn an angle of 90° both with the first and with the second walls 110, 120. In other words, the three walls, taken in pairs, are perpendicular to each other.

The two crosspieces 300 join onto the first and second wall 110, 120, and therefore face the second surface 112, 122 of each of the two walls; the upright 400, on the other hand, joins onto the third wall 130, and it, too, adjoins the second surface 132.

Each of the surfaces 110, 120, 130 has a respective opening 140 for the passage of a respective lock screw 200, in its turn comprising a threaded body 210 and a head 220, having a recess for an operating hexagon, or a technically equivalent socket; the socket is operable by way of non-limiting example, by a hexagonal key, a screwdriver, a Torx key or similar tools. In use, once the device which is the subject of the present innovation is installed and joins the crosspieces to the uprights, the head 220 of the screw remains constrained by stopping against the first surface 111, 121, 131 inside the dihedron (and in particular on the respective wall), while the threaded body 210 extends beyond the respective second wall, at least partially penetrating inside the body of the crosspieces and the upright themselves. Preferably, but non-limitingly, each of the lock screws 200 is equipped with a washer 230 which in use remains crushed between the head of the screw and the respective first surface.

It is clear that although in the present description reference is made to lock screws 200, such screws can be equivalently replaced by at least partially cylindrical elongated constraining means.

Each second surface 112, 122, 132 comprises a pair of pins 150 protruding towards the outside and oriented perpendicularly to the wall and capable of being introduced into respective recesses 160 in blocks 170 interposed between the second surfaces 112, 122, 132 of the three walls of the device which is the subject of the present innovation and the crosspieces and the uprights. The pins 150 can be positioned optionally on steps 190 physically coupled face to face onto the second surface; where present, as illustrated in the annexed drawings, these steps 190 take the substantially square shape of each of the walls 110, 120, 130.

In more detail, the interposed blocks 170 are substantially L-shaped, and are made in such a way as to be introduced by insertion into the members of the crosspieces 300 and the uprights 400, remaining positioned at their ends.

In this situation, the pins 150 are inserted into the above-mentioned recesses 160 formed in the blocks 170 to ensure that the blocks 170 are correctly centred. The above-mentioned centring consequently guarantees the correct positioning between the respective members 300, 400 and the device 100.

Again, it should be noted that each block 170 has a plurality of lateral projections 500 emerging from respective lateral walls, each of them having a substantially parallelepiped conformation with a square transverse section.

Preferably, as illustrated in the attached drawings, each block has four projections 500 which are insertable into respective recesses 610 formed on the lateral walls of the members 300, 400. It should be noted furthermore that in the attached drawings, two projections 500 are illustrated emerging from two different lateral surfaces of the block 170, and two other projections 500 emerging from a single lateral surface . This configuration preferably ensures stable anchoring of the block inside the respective member 500, preventing the block from being able to move inside the member 300, 400 with the consequent problems in assembly operations.

The recesses 610 form through apertures having a conformation complementarily shaped to the rectangular section of said projections 500, so as to bring about the correct and stable anchorage of the block in the respective member.

Advantageously, the members can thus assume a semi-closed profile, with consequent greater structural rigidity for given dimensions compared with open configurations such as those of known type. Each interposed block 170 has an opening 550 for screwing-in for the threaded portion of the lock screw 200, which in use, once it is screwed in, pulls the interposed block towards the second surface of the respective wall and combines to rigidly join the member from outside to the device which is the subject of the present invention.

In particular, it should be noted that the terminal lateral portions of the members 300, 400 form respective edges 600 which are associated to, and stably retained by the device 100 on a respective second surface, 112, 122, 132. In the assembly configuration, the edges 600 of the profiles therefore abut the second surfaces 112, 122, 132 while the steps 190 are housed inside the members, in proximity to the block 170.

For the purposes of the present disclosure, the term 'semi-closed profile' is intended to mean a profile or a section shaped so as to be able to allow a retaining element to be inserted, rigidly constrained to the surfaces of the device which is the subject of the present innovation, thus remaining retained inside the area substantially identified and delimited by the walls of said member.

Consequently, for a given structural rigidity the crosspiece and upright members joined by means of the device which is the subject of the present innovation can have a smaller section, precisely as a result of the closed shape. Advantageously, therefore, the weight of the cabinet in which crosspieces and uprights are fitted can be considerably reduced, because the crosspieces and uprights themselves will each assume a lower weight than the weight of crosspieces and uprights of known type, for a given strength and loadbearing capacity.

In the case illustrated in figure 1 and figure 2, the crosspiece 300 and upright 400 members, specifically configured for coupling with the interposed elements 170, have a double J-shaped profile, i.e. formed from a pair of J-section sub-sections, joined along the entire length of the crosspiece or upright at the wall portion of the J which is most extended perpendicularly to the length of the crosspiece 300 and of the upright 400. This means that if the member extends in length along a first axis X, its section, viewed on a pair of axes Y, Z perpendicular to one another and also perpendicular to the axis X, will comprise a pair of walls 310, 320 (410, 420) of greater extension, joined together, to form the junction-point of the two Js, a second pair of walls 330, 340 (430, 440) each joined to the respective wall of the first pair of walls and arranged perpendicular to the respective wall of the first pair of walls, being joined at the opposite end to the end at which each wall of the first pair of walls is joined to the other, and a third pair of walls 350, 360 (450, 460) each joined to the respective wall of the second pair of walls and arranged perpendicular to the respective wall of the second pair of walls, being joined thereto at the opposite end to the end at which each wall of the second pair of walls is joined to the other. Substantially therefore, the third pair of walls has walls parallel to the respective wall of the first pair of walls.

The device 100 according to the present innovation comprises furthermore a closing cap 180, configured for being positioned adjacent to the dihedron formed by the first, second and third walls 110, 120, 130, in such a way as to make the device which is the subject of the present innovation assume a substantially cubic form.

In order to remain inserted between the three walls 110, 120, 130, the closing cap 180 has respective clips 181 preferably made of flexible material, capable of being inserted into the heads 220 of the lock screws 200. The dimensions of the clips 181 must consequently be comparable to those of the heads of the lock screws. The clips 181 can be replaced by mechanical interacting means in opposition to the head 220, able to create friction on said head 220 such as to overcome at least the weight force to which the cap 180 is subjected.

Preferably, the closing cap 180 is made of plastic, since this material has a low production cost; however, this choice is not to be understood as limiting, since the closing cap 180 can equally be produced in metal.

The closing cap 180 principally forms a protection to the zone defined by the dihedron, inside which are housed the heads 220 of the lock screws 200.

The advantages of the present innovation are clear from the preceding description: the innovation described thus far makes it possible to create a system of constraint between crosspieces and uprights which is of simple type, secure and easily installable by the operator, who has easier access from outside the area defined by the cabinet and no longer from the inside; the operator therefore has a larger area available for moving the tool for tightening the screws, particularly if the cabinet is of small dimensions.

It is clear, finally, that additions, modifications or variants obvious to a person skilled in the field can be applied to what is described in the present innovation without thereby departing from the protective scope provided by the attached claims.

## Claims

1. A fitting device (100) for joining members, comprising a plurality of walls (110, 120, 130) respectively perpendicular with respect to one another and identifying a dihedron; each of the walls of said plurality of walls (110, 120, 130) comprising a first surface (111, 121, 131) facing said dihedron and a second surface (112, 122, 132) opposite said first surface configured to enable retaining members (300, 400) having a semi-closed shape; said device (100) further comprising retaining means (170) jointable in terminal lateral portions of said retaining members having a semi-closed shape so as to be retained in an area substantially delimited by said semi-closed shape, said terminal lateral portions of the retaining members defining respective edges (600) associated to each second surface (112, 122, 132) of said plurality of walls; **characterized in that** said retaining means (170) are interposing blocks exhibiting a plurality of lateral projections (500) insertable in respective recesses (610) fashioned in lateral walls of the retaining members (300, 400).

2. The device according to the preceding claim, wherein said projections (500) exhibit a substantially parallelepiped conformation having a rectangular section, said recesses (610) defining through-openings having a conformation that is complementarily-shaped to the rectangular section of said projections (500).

3. The device according to any one of the preceding claims, wherein, on the respective second surface (112, 122, 132) of each wall of said plurality of walls (110, 120, 130), pins (150) extend, projecting externally of and perpendicularly to said second surfaces (112, 122, 132); said interposing blocks exhibiting walls extending perpendicularly with respect to a respective second surface (112, 122, 132) and exhibiting respective recesses (160) configured for housing said pins (150).

4. The device according to any one of the preceding claims, wherein each wall of said plurality of walls comprises a respective opening (140) for passage of at least a respective elongate constraining means, at least partially cylindrical (200), configured so as to remain in use at least partially internally of said dihedron identified by said plurality of walls (110, 120, 130) and at least partially extending into the respective member (300, 400).

5. The device according to claim 4, wherein said at least partially cylindrical elongate constraining means (200) is a lock screw comprising a head (220) and a threaded portion (210).

6. The device according to claim 5, wherein said retaining means (170) comprise an opening (550) for screwing-in of said threaded portion (210) of said lock screw.

7. The device according to any one of the preceding claims, further comprising a closing cap (180) of said dihedron.

8. The device according to claim 7, wherein said closing cap of said dihedron comprises mechanical interacting means in opposition (181) with said head (220) of said lock screw, which interacting means (181) are able to realize a friction on said head (220) so as to overcome at least a weight force to which said cap (180) is subject.

9. A kit comprising a device according to any one of claims 1-8 and a member having a semi-closed profile.

10. The kit according to claim 9, wherein said member has a lateral profile having a double-J shape.

11. The kit according to claim 10, wherein said member extends in length along a first axis (X), and wherein the section of said member, viewed on a pair of axes (Y, Z) perpendicular to one another and further perpendicular to the axis (X), comprises a pair of walls (310, 320, 410, 420) of greater extension, a second pair of walls (330, 340, 430, 440) each joined to a respective wall of the first pair of walls and perpendicularly arranged with respect to the respective wall of the first pair of walls, being joined at the opposite end with respect to the end in which each wall of the first pair of walls is joined to the other, and a third pair of walls (350, 360, 450, 460) each joined to the respective wall of the second pair of walls and perpendicularly arranged with respect to the respective wall of the second pair of walls, being joined at the opposite end with respect to the end in which each wall of the second pair of walls is joined to the other.

## Patentansprüche

1. Montagevorrichtung (100) für Verbindungselemente, umfassend eine Vielzahl an Wänden (110, 120, 130), die jeweils senkrecht zueinander stehen und ein Dieder identifizieren, wobei jede der Wände aus der Vielzahl an Wänden (110, 120, 130) eine dem Dieder zugewandte erste Oberfläche (111, 121, 131) und eine der ersten Oberfläche gegenüberliegende zweite Oberfläche (112, 122, 132) umfasst, konfiguriert, um das Halten der Elementen (300, 400) zu ermöglichen, eine halb geschlossene Form aufzuweisen, wobei die Vorrichtung (100) ferner Haltemittel (170) umfasst, die in seitlichen Endabschnitten der Halteelementen verbindbar sind und eine halbgeschlossene Form aufweisen, um in einem Bereich gehalten zu werden, der im Wesentlichen durch die halbgeschlossene Form begrenzt ist, wobei die seitlichen Endabschnitte der Halteelemente jeweilige Kanten (600) definieren, die mit jeder zweiten Oberfläche (112, 122, 132) aus der Vielzahl an Wänden assoziiert sind; **dadurch gekennzeichnet, dass** die Haltemittel (170) Zwischenblöcke sind, die eine Vielzahl an seitlichen Vorsprüngen (500) aufweisen, die in jeweilige Ausnehmungen (610) einsetzbar sind, die in seitlichen Wänden der Halteelemente (300, 400) ausgebildet sind.

2. Vorrichtung nach dem vorhergehenden Anspruch, wobei die Vorsprünge (500) eine im Wesentlichen quaderförmige Ausgestaltung aufweisend einen rechteckigen Querschnitt aufweisen, wobei die Ausnehmungen (610) Durchgangsöffnungen definieren, die eine Ausgestaltung aufweisen, die zu dem rechteckigen Querschnitt der Vorsprünge (500) komplementär geformt ist.

3. Vorrichtung nach einem der vorhergehenden Ansprüche, wobei sich Stifte (150) auf der jeweiligen zweiten Oberfläche (112, 122, 132) jeder Wand aus der Vielzahl an Wänden (110, 120, 130) erstrecken, die außerhalb der und senkrecht zu den zweiten Oberflächen (112, 122, 132) vorstehen, wobei die Zwischenblöcke Wände aufweisen, die sich senkrecht in Bezug auf eine jeweilige zweite Oberfläche (112, 122, 132) erstrecken und jeweilige Ausnehmungen (160) aufweisen, die zum Aufnehmen der Stifte (150) konfiguriert sind.

4. Vorrichtung nach einem der vorhergehenden Ansprüche, wobei jede Wand aus der Vielzahl an Wänden eine jeweilige Öffnung (140) zum Durchgang von mindestens einem jeweiligen langgestreckten, mindestens teilweise zylindrischen (200), Zwangsmittel umfassen, das so konfiguriert ist, dass es bei Gebrauch mindestens teilweise innerhalb des Dieders verbleibt, das durch die Vielzahl an Wänden (110, 120, 130) identifiziert ist und sich mindestens teilweise in das jeweilige Element (300, 400) erstreckt.

5. Vorrichtung nach Anspruch 4, wobei das mindestens teilweise zylindrische langgestreckte Zwangsmittel (200) eine Feststellschraube ist, die einen Kopf (220) und einen Gewindeabschnitt (210) umfasst.

6. Vorrichtung nach Anspruch 5, wobei die Haltemittel (170) eine Öffnung (550) zum Einschrauben des Gewindeabschnitts (210) der Feststellschraube umfassen.

7. Vorrichtung nach einem der vorhergehenden Ansprüche, ferner umfassend eine Verschlusskappe (180) des Dieders.

8. Vorrichtung nach Anspruch 7, wobei die Verschlusskappe des Dieders mechanische Wechselwirkungsmittel (181) gegenläufig mit dem Kopf (220) der Feststellschraube umfasst, wobei die Wechselwirkungsmittel (181) in der Lage sind, eine Reibung an dem Kopf (220) zu erzeugen, um mindestens eine Gewichtskraft zu überwinden, der die Kappe (180) unterzogen ist.

9. Bausatz, umfassend eine Vorrichtung nach einem der Ansprüche 1-8 und ein Element aufweisend ein halbgeschlossenes Profil.

10. Bausatz nach Anspruch 9, wobei das Element ein seitliches Profil aufweisend eine Doppel-J-Form aufweist.

11. Bausatz nach Anspruch 10, wobei sich das Element in der Länge entlang einer ersten Achse (X) erstreckt, und wobei der Querschnitt des Elements, wenn auf einem Paar von Achsen (Y, Z) senkrecht zueinander und weiter senkrecht zu der Achse (X) betrachtet wird , ein Paar von Wänden (310, 320, 410, 420) mit größerer Erstreckung, ein zweites Paar von Wänden (330, 340, 430, 440), die jeweils mit einer jeweiligen Wand des ersten Paares von Wänden verbunden und senkrecht in Bezug auf die jeweilige Wand des ersten Paares von Wänden angeordnet sind, die an dem gegenüberliegenden Ende in Bezug auf das Ende verbunden sind, in dem jede Wand des ersten Paares von Wänden mit dem anderen verbunden ist, und ein drittes Paar von Wänden (350, 360, 450, 460) umfasst, die jeweils mit der jeweiligen Wand des zweiten Paares von Wänden verbunden und senkrecht in Bezug auf die jeweilige Wand des zweiten Paares von Wänden angeordnet sind, die an dem gegenüberliegenden Ende in Bezug auf das Ende verbunden sind, in dem sich jede Wand des zweiten Paares von Wänden verbunden ist.

## Revendications

1. Dispositif de montage (100) pour des membres d'assemblage, comprenant une pluralité de cloisons (110, 120, 130) respectivement perpendiculaires les unes par rapport aux autres et identifiant un dièdre ; chacune des cloisons de ladite pluralité de cloisons (110, 120, 130) comprenant une première surface (111, 121, 131) faisant face au dit dièdre et une seconde surface (112, 122, 132), opposée à ladite première surface, configurée pour permettre la retenue des membres (300, 400) ayant une forme semi-fermée ; ledit dispositif (100) comprenant de plus des moyens de retenue (170) pouvant s'assembler dans des parties latérales d'extrémité desdits membres de retenue ayant une forme semi-fermée de manière à être retenus dans une zone substantiellement délimitée par ladite forme semi-fermée, lesdites parties latérales d'extrémité des membres de retenue définissant des bords (600) respectifs associés à chaque seconde surface (112, 122, 132) de ladite pluralité de cloisons ; **caractérisé en ce que** lesdits moyens de retenue (170) sont des blocs d'interposition présentant une pluralité de saillies latérales (500) pouvant s'introduire dans des renfoncements (610) respectifs réalisés dans des cloisons latérales des membres de retenue (300, 400).

2. Dispositif selon la revendication précédente, dans lequel lesdites saillies (500) présentent une forme substantiellement parallélépipédique comportant une section rectangulaire, lesdits renfoncements (610) définissant des ouvertures passantes étant de forme complémentaire à la section rectangulaire desdites saillies (500).

3. Dispositif selon l'une quelconque des revendications précédentes, dans lequel, sur la seconde surface (112, 122, 132) respective de chaque cloison de ladite pluralité de cloisons (110, 120, 130), des goujons (150) se prolongent, en dépassant extérieurement et perpendiculairement par rapport auxdites secondes surfaces (112, 122, 132) ; lesdits blocs d'interposition présentant des cloisons se prolongeant perpendiculairement par rapport à une seconde surface (112, 122, 132) respective et présentant des renfoncements (160) respectifs configurés pour loger lesdits goujons (150).

4. Dispositif selon l'une quelconque des revendications précédentes, dans lequel chaque cloison de ladite pluralité de cloisons comprend une ouverture (140) respective pour le passage d'au moins un moyen de liaison allongé respectif, au moins partiellement cylindrique (200), configuré de manière à rester en usage au moins partiellement à l'intérieur dudit dièdre identifié par ladite pluralité de cloisons (110, 120, 130) et se prolongeant au moins partiellement dans le membre (300, 400) respectif.

5. Dispositif selon la revendication 4, dans lequel au moins ledit moyen de liaison allongé (200) partiellement cylindrique est une vis de blocage comprenant une tête (220) et une partie filetée (210).

6. Dispositif selon la revendication 5, dans lequel lesdits moyens de retenue (170) comprennent une ouverture (550) pour visser ladite partie filetée (210) de ladite vis de blocage.

7. Dispositif selon l'une quelconque des revendications précédentes, comprenant de plus un cache de fermeture (180) dudit dièdre.

8. Dispositif selon la revendication 7, dans lequel ledit cache de fermeture dudit dièdre comprend des moyens d'interaction mécaniques (181) en opposition à ladite tête (220) de ladite vis de blocage, lesdits moyens d'interaction (181) pouvant réaliser une friction sur ladite tête (220) de sorte à surmonter au moins une force massique à laquelle est soumis ledit cache (180).

9. Kit comprenant un dispositif selon l'une quelconque des revendications 1-8 et un membre ayant un profil semi-fermé.

10. Kit selon la revendication 9, dans lequel ledit membre a un profil latéral ayant une forme en « double J ».

11. Kit selon la revendication 10, dans lequel ledit membre se prolonge en longueur le long d'un premier axe (X), et dans lequel la section dudit membre, vue sur une paire d'axes (Y, Z) perpendiculaires l'un à l'autre et de plus perpendiculaires à l'axe (X), comprend une paire de cloisons (310, 320, 410, 420) d'extension supérieure, une seconde paire de cloisons (330, 340, 430, 440) jointes chacune à une cloison respective de la première paire de cloisons et disposées perpendiculairement par rapport à la cloison respective de la première paire de cloisons, étant assemblées à l'extrémité opposée par rapport à l'extrémité dans laquelle chaque cloison de la première paire de cloisons est jointe à l'autre, et une troisième paire de cloisons (350, 360, 450, 460) unies chacune à la cloison respective de la seconde paire de cloisons et perpendiculairement disposées par rapport à la cloison respective de la seconde paire de cloisons, étant assemblées à l'extrémité opposée par rapport à l'extrémité dans laquelle chaque cloison de la seconde paire de cloisons est assemblée à l'autre.
